# EUROPEAN PATENT SPECIFICATION

(11) **EP 2 231 058 B1**
(45) Date of publication and mention of the grant of the patent: **10.05.2017**
(21) Application number: 08867244.9
(22) Date of filing: 11.12.2008
(51) Int. Cl.: A61C 19/00, A61C 19/02, A61M 35/00, A61C 5/60, A61C 5/66, B65D 81/32

(54) **DENTAL PACKAGE, AND METHOD OF PROVIDING A DENTAL MATERIAL FROM A PACKAGE**
DENTALPAKET UND VERFAHREN ZUR BEREITSTELLUNG EINES DENTALMATERIALS AUS EINEM PAKET
EMBALLAGE DENTAIRE, ET PROCÉDÉ DE DISTRIBUTION D'UN MATÉRIAU DENTAIRE DEPUIS UN EMBALLAGE

(30) Priority: 19.12.2007 US 14930 P
(43) Date of publication of application: 29.09.2010
(73) Proprietor: 3M Innovative Properties Company, St. Paul, MN 55133-3427 (US)
(72) Inventor: BOEHM, Andreas J., 82229 Seefeld (DE); PEUKER, Marc, 82229 Seefeld (DE); POSCHMANN, Dieter, 82229 Seefeld (DE); RUSIN, Richard P., St.Paul, MN 55133-3427 (US); DUBBE, John W., 82319 Starnberg (DE)
(74) Representative: Hohmann, Arno
(86) International application number: PCT/US2008/086413
(87) International publication number: WO 2009/085636

(56) References cited:
- EP-B1- 1 301 788
- WO-A1-00/09414
- WO-A1-98/11845
- WO-A1-2006/062613
- DE-A1- 10 047 679
- JP-A- H11 292 154
- US-A- 4 428 373
- US-A- 6 105 761
- US-A1- 2007 183 835
- US-B1- 6 394 803

## Description

The present invention relates to a device for providing a dental material. In particular, the present invention relates to a device and a kit that allow storing the dental material in the device, and providing the dental material in a convenient way to a user. The invention further relates to a method of providing a dental material from such a device or kit.

### Background of the invention

In the dental field a number of liquid and semi-liquid compositions are made from two or more flowable components that are typically separately stored, and only mixed together immediately prior to use. For example, certain dental compositions like dental adhesives, sealants or etchings are offered in packages that initially store components of the dental composition separate from one another. The dental compositions then can be obtained by mixing the components when needed. After mixing the components, the dental composition may be applied to a desired place, for example in the cavity of a tooth in a patient's mouth.

A variety of packages have been proposed over the years for separately containing and storing components of multi-component compositions. Examples of commonly-used packages for multi-component compositions include dual-chamber cartridges, dual-chamber syringes or dual-chamber blister packages. Such packages are typically designed to provide a readily mixable composition, or to provide the components individually for subsequent mixing. There are also single use packages for providing suitable amounts of composition for a single treatment.

For example US 6,105,761 discloses a device for storing and dispensing substances, including a container formed by two sheets that are interconnected by heat sealing. The sheets form a compartment for receiving the liquid and a pocket for receiving a brush. In the area between the compartment and the pocket, the connection between the sheets includes a pre-defined break zone which can be released by pressure exerted on the compartment, to force the liquid from the compartment into the pocket and wet the tip of the brush disposed therein.

DE 100 09 622 discloses a device for storing and dispensing substances, including a container formed by two sheets, interconnected by heat sealing and cooperating to form a compartment for receiving the liquid and a pocket for receiving a brush. The device is designed to allow a liquid stored in the compartment to be forced in a pocket and from there onto a film sheet where it can be mixed.

There is still a desire for packages that can be used to provide multi-component compositions for different applications. In particular, suitable packages for providing relatively small amounts of a composition are desirable. Moreover, there is a need for packages that can be used in health care fields such as in dentistry, with its associated hygiene requirements. There is also a general need for packages that are relatively inexpensive to manufacture and use.

### Summary of the invention

A first aspect of the invention is related to a device for providing a dental material. The device comprises:
a first and a second sheet-like layer that are interconnected to form a compartment,
the first layer comprising a well adjacent the compartment,
an openable seal being arranged between the well and the compartment,
the openable seal being formed by the interconnected layers which in the area of the openable seal are adapted to separate upon forcing at least a component of the dental material between the layers,
wherein the second layer only partially overlaps the well.

The first and second sheet-like layers are preferably two separate sheets. Alternatively, the first and second sheet-like layers may be part of one larger sheet. The larger sheet may be folded to form the first and second layers.

In an embodiment of the invention a larger sheet may be folded to form the first layer and a first part of the second layer. The second layer then may comprise at least a second part. The second part of the second layer may also be part of the larger sheet, or a separate sheet. Therefore the second layer may comprise a first and a second part. The second layer may also comprise a first part, a second part, and further parts.

The partial overlap of the layer and the well advantageously helps to guide a material stored in the compartment into the well, preferably without spilling the material. Further, the material is preferably prevented from flowing toward areas other than the well. Therefore substantially all of the material may be made available for use. The overlap may also serve as a wiper edge, allowing material to be stripped from an applicator into the well. On the other hand the open configuration of the well provides visibility of the material in the well. At least some of the material properties may therefore be assessable by a user.

The well preferably is formed by a portion of the first layer. For example, the well may be deep drawn in the first layer. The junction between the portion of the first layer forming the well and the remainder of the first layer preferably forms an opening of the well. The second layer preferably only partially overlaps the opening of the well. The second layer may overlap less than 1/2 of the area of the opening of the well, preferably about 1/3 of the area of the opening of the well. The remaining open area, which is the area of the opening not overlapped by the second layer, preferably forms an access window for the well. Preferably, the opening of the well is generally circular. The portion of the second layer overlapping the well preferably has a free end spanning the opening of the well, wherein the free end is substantially straight.

Preferably the openable seal is adapted to form, when opened, a pathway for guiding the component(s) from the compartment into the well.

In one embodiment the device comprises an open pocket for receiving an applicator. The applicator may be a brush, a sponge, a spatula, swabs or any other applicator suitable for application of the dental material or a component of the dental material. Preferably the applicator is configured for a single use. The applicator may be, for example, made of relatively inexpensive and environmentally friendly materials and manufactured using relatively inexpensive manufacturing processes.

In a further embodiment the device comprises a conduit for receiving the applicator. The conduit may have first and second open ends. The second end may be arranged adjacent the opening of the well. The conduit may have a longitudinal axis extending through the first and second ends, and which preferably also extends through the well. Thus the applicator with its applicator end may be insertable into the conduit through the first opening. During storage of the device the applicator end may be positioned in the conduit. To use the device, the applicator may be moved toward the well (in a direction from the first toward the second end), so that the applicator end exits the conduit and arrives in the well. Therefore the device may provide for securing the applicator to the device so that, for example, the applicator is not easily lost during shipment of the package. Further therefore the use of the applicator may be facilitated.

The second end of the conduit may be initially closed. The conduit therefore may initially form a pocket with the first open end. For example, the conduit may be formed between the two layers which in the area of the second end of the conduit are non-permanently connected (for example sealed with one another but separable if pulled away from each other, however the skilled person may also appreciate other solutions). The second end may open automatically when the applicator is pushed toward the well. Therefore the applicator end of the applicator may be retained in the conduit and prevented from moving into the well during transport of the device. Thus the applicator end may also be protected from the environment during transport of the device.

In another embodiment the device comprises a receptacle for receiving the applicator. The receptacle may have a groove which is sized to receive the applicator. The receptacle may be formed by the first layer, for example only by the first layer. The groove may extend generally linearly and may have a generally U-shaped cross-section. The U-shaped cross-section may at least over a portion of the length of the groove be sized relative to the applicator to frictionally retain the applicator when the applicator is placed in the receptacle. The applicator may also be retained in the groove by an adhesive, for example, an adhesive in the groove and/or on the applicator. Further the applicator and the layer forming the groove may be heat sealed with each other so that a bond between the groove and the applicator is established.

The groove may further at least over a portion of its length have a generally Ω-shaped cross-section (or U-shaped with the ends of the legs extending inwardly) of a size sufficient to receive and mechanically lock the applicator in the groove. Such groove may for example provide a snap fit with the applicator. The generally Ω-shaped cross-section may be formed by the first layer only. The generally Ω-shaped cross-section may further be formed by a generally U-shaped layer (for example the first layer) and at least a portion of another layer (for example the second layer) overhanging the open side of the U. Thus a receptacle may be formed that provides a snap fit with the applicator. In another embodiment the receptacle may be formed by a generally U-shaped groove and two portions of another layer overhanging the open side of the U. The overhanging portions may abut each other so that they generally close the groove, but allow the applicator to pass through into the groove and out of the groove. This may help prevent undesired materials (like dust and/or dirt)from penetrating into the receptacle.

A receptacle according to the invention may be particularly advantageous in (but is not limited to a) use of an applicator of a type having bristles that extend generally parallel to a longitudinal axis of the applicator. Thus the receptacle may reduce the risk of deformations of the bristles during placement of the applicator in the receptacle.

In another embodiment the first layer comprises a first deep drawn bulge that together with the second layer forms the compartment. Preferably the second layer entirely overlaps the first bulge to form the compartment. The second layer may further be interconnected with the first layer along a closed line around the first bulge. Therefore the compartment may be hermetically sealed by the first and second layers.

In a further embodiment at least one of the first and second layers has a transparent area that forms a part of the compartment. The transparent area preferably forms a window providing a view of the contents of the compartment. For example a user may observe the dental material or a component of the dental material in the compartment for assessing at least some of its properties, including the quantity.

In another embodiment the device of the invention may further comprise a second compartment formed by the interconnection of the first and the second layers with a second seal arranged between the compartments. The first layer may therefore comprise a second deep drawn bulge that together with the second layer forms the second compartment. Preferably the second layer also entirely overlaps the second bulge to form the second compartment. The second layer may further be interconnected with the first layer along a second closed line around the second bulge. Therefore the second compartment may be hermetically sealed by the first and second layers.

The second layer may also comprise a third bulge. The third bulge may overlap the first bulge. Alternatively the third bulge may overlap the second bulge. For example, the third bulge and the first (or second) bulge may be arranged atop one another. The third bulge may be arranged with its deep drawn cavity oriented toward the deep drawn cavity of the first or the second bulge. The third bulge may alternatively extend into the cavity of the first or the second bulge. Furthermore, the second layer may comprise a fourth deep drawn bulge. In this case, the third bulge may overlap the first bulge and the fourth bulge may overlap the second bulge.

In a particular embodiment, the first bulge may be arranged in the second layer, and the second bulge may be arranged in the first layer. Or, the first bulge may be arranged in the first layer, and the second bulge may be arranged in the second layer. In this particular embodiment a third bulge may be arranged in the other of the layer containing the first or the second bulge. Further, a fourth bulge may be arranged in the other of the layer containing the second bulge.

The device may have further bulges that together with the cover form further compartments. The compartments may be sealed by individual sealing areas, by a continuous sealing area, or a combination. All possibilities are, however, included when referring to interconnected layers with respect to this specification.

In another embodiment the device may have at least one further bulge which with another bulge or the well forms a stand for the device. For example the well may form one leg or rest of the stand and at least two bulges may be arranged to form other rests which may be required to provide a positionally stable stand for the device. Instead of bulges in the layers, the layers may be folded or bent to provide a similar function.

Also the second and/or further compartments may be provided with transparent areas. In particular, at least one of the first and second layers may have a transparent area that forms a part of the second compartment. Further, at least one of the first and second layers may have a transparent area that forms a part of at least one of the compartments.

The transparent area(s) may be used, for example, to assess the mixing quality of a mixture of components stored in the device. The components may, for example, have different individual colors, and may be adapted to form a mixing color different from the individual colors which can be used to assess sufficient mixing. The device may also have a reference color area, for example next or adjacent the transparent area(s), allowing for comparison of the mixing color with the reference color.

In another embodiment the well has a capacity suitable to receive the combined contents of both compartments. The well may also have a greater capacity, for example a capacity of 2 or 3 times of the combined compartment volume. A greater volume may facilitate the mixing of the contents within the well. The greater volume of the well may also allow substances obtained from sources other than the device to be added. For example, a colorant may be added in the well to change the color shade of the contents.

In a particular embodiment the first and second layers are made of a multilayer film having an outer layer of polyethylene. At least one of the first and second layers may comprise a multilayer foil comprising an aluminum layer. Therefore the material may be generally inexpensive, but may provide a relatively impermeable barrier.

In another embodiment the device of the invention contains at least one component of a dental restorative, a dental primer, a dental cavity liner, a dental cement, an endodontic material, a dental varnish, a tooth desensitizer, a tooth coating, an orthodontic adhesive, an orthodontic primer, or an orthodontic cement.

The compartments of the device may have a capacity to store quantities of between about 0.01 ml and about 3 ml. Therefore the device may be suitable for providing material in the rather small quantities typically used in dentistry. Preferably the individual compartments of the device have a capacity to provide a total quantity of material sufficient for a single dental treatment. Such total quantity may be between about 0.03 ml and about 1.5 ml.

In a particular embodiment the access window of the well (the area of the opening of the well which is not overlapped by the second layer) is covered by a removable layer. The removable layer may be formed by a portion of the second layer which may be removably attached to the first layer in an area around the well. Therefore the device could be provided with the well being initially closed, and a user could tear the well open for use of the device. For example, the user may peel back a part of the second layer to open the well. This may be advantageous in that the well, for example during storage or transport, may be protected against contamination. In another embodiment the removable layer is formed by a portion of the second layer which is at least partially connected to the remainder of the second layer by a perforation. Therefore the user could remove or tear open the portion of the second layer that initially covers the access window of the well by separating the perforation. In another alternative, the access window of the well may be closed by a label, for example an adhesive label. Such label may be removably connected to the device at least in an area around the well. Further, such label may be used to mechanically secure an applicator to the device, and/or to connect several devices with one another. An adhesive label may also be used to re-close the well. This may be advantageous if material transferred in the well has to be kept in the well over some time. In particular this may be useful in case volatile material components are used with the device.

In another particular embodiment the device may be provided with a gripping area. A user may hold the device conveniently at the gripping area during use, for example, during mixing components in the well, or removal of components from the well. The gripping area may be formed by an extension of one or both of the first and the second layers. For example, a tab or flap may be formed by the layer(s) of the device. The gripping area may be structured, for example may comprise linear bulged structures. Thereby the gripping area may obtain a better mechanical stability relative to a non-structured area which may provide a more convenient handling of the device in use.

A second aspect is directed to a method of providing a dental material. The method comprises the steps of:
providing a device comprising:
   a first and a second layer that are interconnected to form a first and a second compartment,
   the first and second compartments containing first and second components of a dental material,
   the first layer comprising a well adjacent the first compartment,
   a first openable seal is formed between the compartments, and a second openable seal is formed between the first compartment and the well, wherein the second layer partially overlaps the well;
   compressing at least one of the first and second compartments, and thereby opening the second openable seal and establishing a fluid communication between the first and the second compartments to enable the components to mix;
   compressing at least one of the first and second compartments, thereby opening the first openable seal; and
   forcing at least part of the first and second components into the well.

The method may further comprise the step of alternately compressing the first and second compartments to displace the first and second components between the first and second compartments. Preferably, the second seal is opened prior to opening the first seal. The components may thereby be agitated. Thereby mixing may be facilitated. The method may further comprise the step of observing the first and second components through a transparent area in at least one of the first and second layers. Preferably a user observes the first and second components through a transparent area, and may control the intensity and/or the duration of agitation of the first and second components. For example, a user may agitate the components until they are sufficiently mixed. The method may comprise using the transparent area(s) to assess the mixing quality of a mixture of components stored in the device. The method may also comprise comparing a color of a mixture from components stored in the device with a reference color area on the device.

The method of the invention may also comprise the step of mixing the components in the well. The first and second components may be transferred into the well with or without prior mixing in the compartments. In both cases the user may mix or further mix the components to a desired extent. The method may also include adding a component from a source other than the device, so that the user may mix the added component with the transferred components in the well.

A third aspect of the invention is related to a kit of parts. The kit comprises a device according to any embodiment of the invention, and a separate dental product selected from a dental crown, bridge, restorative, implant, adhesive, instrument, sealant, dentifrice, oral rinse, orthodontic bracket, and bands. The kit may further comprise instructions for using the device of any embodiment of the invention according to the method of any embodiment of the invention. Preferably the kit comprises a plurality of devices according to any embodiment of the invention. The plurality of devices may each include components exhibiting different characteristics, so that a range of dental products may be provided in the kit. For example, the kit may comprise a plurality of devices containing components of different color shades.

The device of the invention is advantageous because it preferably facilitates the variable preparation of a material provided by the device for different applications. Therefore the device can preferably be used for a variety of different applications. The device further preferably allows a user to adapt the material according to personal preference. As an advantage the material provided by the device may also be combined with materials from other sources. The device is generally inexpensive to manufacture. Further, the device may be manufactured in many different configurations, preferably without considerable changes in the manufacturing equipment. As another advantage the device is generally easy to use, for example because it allows one-handed use. It is further advantageous that the device provides a relatively long storage period of the materials contained.

### Brief description of the Drawings

Fig. 1 is a perspective top view of the device according to an embodiment of the invention;
Fig. 2 is a cross-sectional view along the line 2-2 of Fig. 1;
Fig. 3 is a cross-sectional illustration of the device in use according to an embodiment of the invention;
Fig. 4 is a perspective view illustrating a use of the device according to an embodiment of the invention;
Fig. 5 is a bottom view of the device according to an embodiment of the invention;
Figs. 6a, 6b, 6c are schematic views of different stages of use of the device according to an embodiment of the invention;
Figs. 7, 8 are schematic views illustrating optional features of the device according to further embodiments of the invention;
Fig. 9 is a schematic illustration of an effect that may be observable at a device of background art;
Fig. 10 is a schematic detail view illustrating a use of the device according to an embodiment of the invention;
Fig. 11 is a schematic view of a device having a transparent area according to an embodiment of the invention;
Fig. 12 is a top view of a device according to another embodiment of the invention.

### Detailed Description of the Drawings

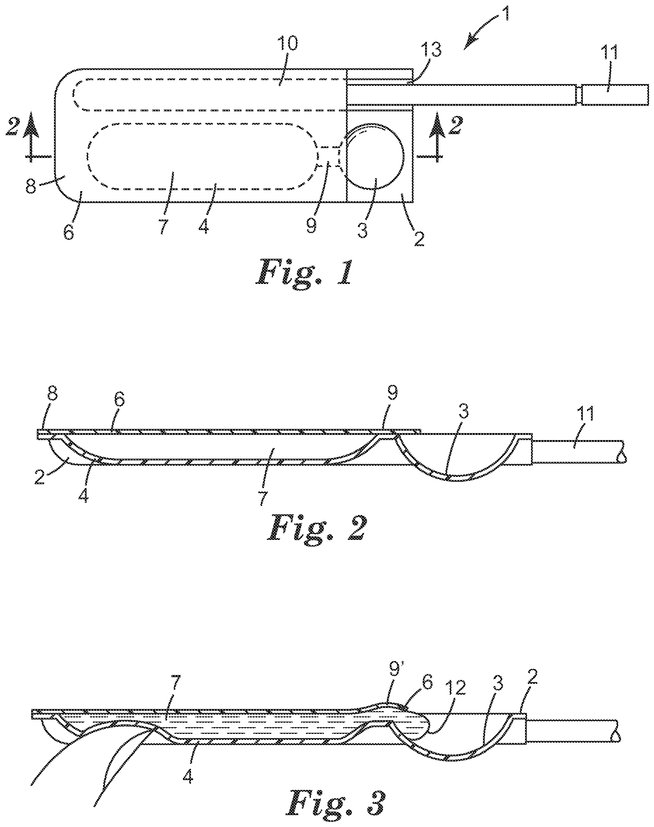

Fig. 1 is a top view of the device 1 according to one embodiment of the invention. The device 1 basically has a compartment 7 for containing a material component, a well 3 for receiving the component and, preferably, an applicator 11. The applicator may be generally used to assist in opening the seal between a compartment and the well, to mix material(s) or components within the compartment, to pick up material from the well, to agitate the material in the well and/or to assess a property of the material such as its viscosity.

The device may also have two or more compartments for storing two or more components, respectively. However, for clarity Fig. 1 refers to a device having only one compartment, by way of example.

The component stored in the device may be transferred from the compartment into the well for further processing or use. Because the well is only partially covered, and otherwise open, the user can observe the properties of the component(s) in the well. The well preferably can be used to receive a further component that either may be stored in a separate compartment of the device (not shown in Fig. 1), or which may be obtained from another source, for example from a bottle. The components received in the well may be mixed, for example by use of the applicator, to form a composition. Or the components may be used without intentional prior mixing. In the latter case the components may be transferred from compartments of the device into the well, but left generally unmixed. Therefore, the well may comprise zones that may receive the initial components. However, the components may merge, blend, or mix at areas where they are in contact with one another. Such zones of blended components may be comprised of the components at different ratios. The applicator in this case may be used to pick up material from any of the zones. For example, if the device contains components of different color shades, a variety of shades may be obtained from those different zones.

A dentist may use the device of the invention to specifically prepare a dental material according to a particular situation in a patient's mouth. The device may allow, for example, using the components in their initial composition as they are stored in the device, as a mixture of components at different mixing ratios, or in combination with components added from sources other than the device. The dentist may, for example, prepare the dental material at a color that resembles the color of a natural tooth that is to be treated. The dentist may also control the consistency of the material. For example, the dentist may use the material at a lower viscosity for smaller repair or preparation works where it is useful for the material to flow into cracks and openings, and at a higher viscosity for applications in which the material is used for filling larger cavities, or the like.

In the following the technical configuration and the use of several embodiments of the device are explained by example, without the intent of limiting the invention to the examples described.

Fig. 1 shows the device 1 of the invention. Some details indicated in Fig. 1 are further illustrated in Fig. 2 which is a cross-sectional view along the line 2 - 2 of the device of Fig. 1. The device 1 has a base 2 (corresponding to the "first layer" referred to above) in which a bulge 4 and the well 3 (also in the form of a bulge) are arranged. The base 2 is partially coextensive with a cover 6 (corresponding to the "second layer" referred to above). Cover 6 entirely spans the bulge 4 to create compartment 7, but only partially spans the well 3. The well 3 is left partially open so that it is visible and accessible to a user, for example. The base 2 of the device 1 may have one or more further bulges for forming two or more compartments, as indicated above. The base 2 and the cover 6 are interconnected, preferably directly, for example heat-sealed, to one another so that the compartment 7 is sealed in its initial state. The device 1 may thus be suitable for storing a material over a relatively long time, for example to encapsulate the material in the compartment 7 against environmental conditions, like air or moisture which may cause changes in the material. The interconnection may generally include an indirect interconnection, meaning that something is between the base and the cover. For example, the base 2 and the cover 6 may be interconnected with primers, bonding agents, adhesives or other suitable materials.

An exemplary sealing area 8 is indicated in Fig. 1. The sealing area 8 preferably provides a permanent seal, and the passage area 9 preferably provides an openable seal. The terms "permanent" and "openable" preferably refer to the bond strength between the base 2 and the cover 6. Preferably the openable seal (passage area 9) is adapted to open due to the application of finger pressure to a compartment while the permanent seal (sealing area 8) remains sealed. Finger pressure is preferably in a range of 5 N to 70 N, preferably in a range of 15 N to 50 N. The sealing area 8 and the passage area 9, in combination, preferably provide a hermetic seal for the compartment 7. The openable seal further preferably allows the compartment 7 to be opened for use of the device.

There are a variety of approaches for providing a seal that is permanent in one area and openable in another area. Preferably, such differential seal (permanent/openable) is provided by sealing the base and the cover using different sealing parameters. For example the base and the cover may be made of layers that may be heat-sealed together. To provide a permanent seal the layers may, for example, be heat-sealed at a higher sealing temperature and/or a longer sealing time relative to the openable seal. Thereby the areas that are heat-sealed at a longer time and/or a longer temperature obtain higher bond strengths than areas heat-sealed at a shorter time and/or a lower temperature. However, the base 2 and the cover 6 in the different seal areas may also be interconnected using different types of glue forming different bond strengths with one or both of the interconnected parts. The different glue types may also have different cohesion properties so that the glue type used for the openable seal fractures when exerted to a certain force while the other glue type withstands that force.

The base 2 and the cover 6 may be comprised of generally flexible sheet-like layers of material, for example of films of a plastic material. The bulges and the well may be deep-drawn within the layer used for the base 2 and may therefore also be flexible or deformable. The layers may form a diffusion or permeation barrier between the compartment and the environment, for example to avoid ingredients of the component stored in the compartment to escape through the layer by permeation. This may for example allow storing components including rather volatile ingredients (like some solvents) over a relatively long time period.

An exemplary configuration of a layer used for the base may be formed of a polypropylene sublayer, an aluminum sublayer, and a polyethylene sublayer. In particular an oriented polypropylene (OPP) sublayer, an aluminum sublayer, an ethylene acrylic acid (EAA) sublayer and a high-density polyethylene sublayer. An exemplary configuration of a layer used for the cover may be formed of a polyethylene terephthalate sublayer, an aluminum sublayer, and a polyethylene sublayer. In particular a polyethylene terephthalate layer, an aluminum layer, an ethylene acrylic acid (EAA) sublayer, and a polyethylene sublayer. In both layers, a polyethylene terephthalate sublayer may be provided between the aluminum sublayer and polyethylene layers. The device may also be formed of one single sheet according to any of the configurations mentioned, and such sheet may be folded to form a base and a cover layer.

The device shown in Fig. 1 further has a pocket 10 for receiving an applicator 11. The pocket 10 in the example is formed by a receptacle 13 in the base 2, and the receptacle 13 is enclosed by the cover 6. The pocket may also be otherwise formed, for example, by only providing an area in which the base 2 and the cover 6 are generally unconnected so that the applicator can be inserted, whereby the unconnected parts displace and from a pocket. The pocket may instead be formed by forming a receptacle in the cover, or in both the cover and the base. A receptacle formed in any of the base and/or the cover may also be used to provide the device with a certain stiffness. For example, as shown in Fig. 1 the receptacle may provide stiffness of the device in the passage area 9 which may otherwise tend to bend because the device in the passage area may be rather thin.

Alternatively the applicator may be attached to the outside of the device by use of a removable adhesive, for example the 3M™ Scotch-Weld™ Hot Melt Adhesive 3798 LM Gummy Glue, as available from 3M Company, St. Paul, MN, or another attachment system such as hook and loop fasteners.

Fig. 3 shows the device when it is used to transfer a component stored in the compartment 7 into the well 3. The bulge 4 is compressed by a user so that sufficient pressure is generated in the compartment 7 to cause the openable seal to open due to the separation of the base 2 and the cover 6 in the passage area 9 (shown in Fig. 1). The passage area 9 is restricted by the seal area 8 so that the base 2 and cover 6 when separated form a flow channel 9' between the compartment 7 and the well. Upon further deforming the bulge 4 the component 12 can be forced from compartment 7 through the flow channel 9' into the well 3. The user may initially mix the component 12 prior to opening the seal. For example, the user may, without applying forces that would cause the seal to open, deform the bulge in different areas and thereby agitate the component 12 within the compartment 7. This may be advantageous for use with components that tend to separate during storage, for example.

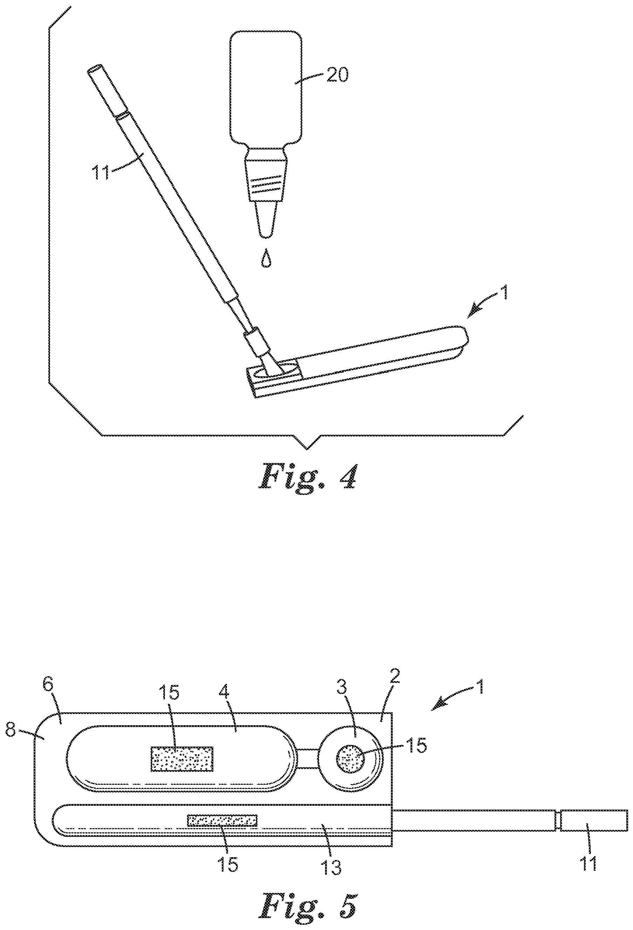

Fig. 4 illustrates the optional addition of a component from a bottle 20 and the use of the applicator 11. As shown the applicator can be used to agitate material in the well, for example to mix the component stored in the device with another component which in this example is supplied from a bottle (as shown), but which also may be stored in another compartment of the device (not shown). By agitating the material in the well a user may also assess the property of the material, for example the viscosity, the color or the mixing quality.

Fig. 5 is a bottom view of the device of the invention showing the receptacle 13, the bulge 4 and the well 3. The receptacle 13, the bulges 4 and the well 3 are arranged relative to one another to provide the device with a relatively stable stand when placed with the base 2 on a generally horizontal surface. This may be advantageous, for example if a dental material is used with the device. A dentist may prepare a dental material in the well 3 of the device 1 and deposit the device 1 on a tray from which she or he may pick up the material for treatment of a patient. This preferably allows the dentist to use the device with one hand only, and preferably enables her or him to use an instrument or a dental mirror in the other hand, for example. The device 1 in the example is provided with removable adhesive 15 at one or both bulges and/or the receptacle. This may provide for even better stability of the device on the surface, and may avoid slipping of the device on the surface, for example when the dentist mixes material in the well, or withdraws/removes material from the well.

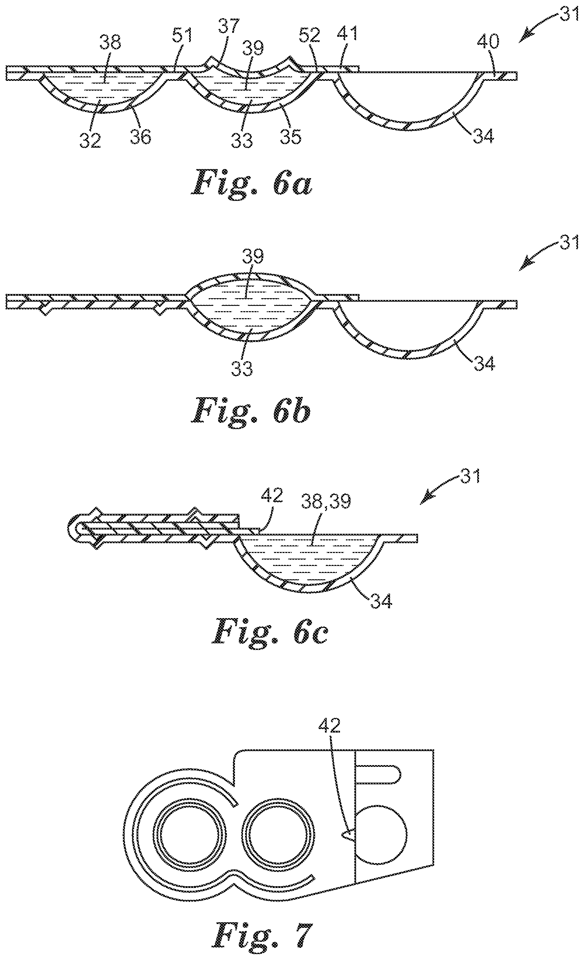

Figs. 6a, 6b and 6c show a device 31 according to the invention at different stages of use. Fig. 6a shows the device 31 in an initial stage. The device 31 has two compartments 32, 33 containing components 38, 39 respectively, and a well 34. The compartments 32, 33 are separated from one another by an openable seal 51, and the compartment 33 is separated from the well 34 by an openable seal 52. The compartments 32, 33 are formed by bulges 35, 36 in combination with a cover 41. The bulges 35, 36 are formed, for example deep-drawn, in a base 40. The cover 41 in the area spanning the bulge 35 also is bulged out in a direction away from the bulge 35, and then preferably depressed towards bulge 35 to provide some additional capacity. Therefore an extendible bulge 37 is formed. The compartment 33 is thus provided with a volume extension. The volume extension may provide the compartment 33 with additional capacity, for example for receiving the content of the compartment 32 of the device as shown in Fig. 6b.

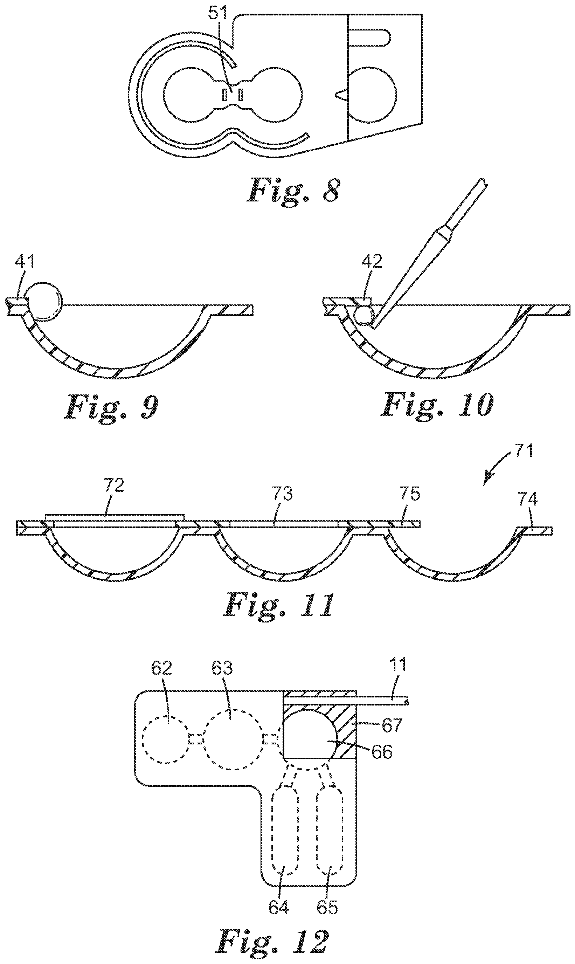

Fig. 6b shows the device 31 in a stage where the component of the compartment 32 is transferred into the compartment 33. This may be done, for example, by compressing the compartment 32 to create a pressure sufficient to open the openable seal 51 so that a flow channel forms between the compartments 32, 33. The contents of the compartment 32 may then be forced towards the compartment 33 by squeezing the compartment 32. In the illustrated embodiment the openable seal 52 (between the compartment 33 and the well) is still closed, thus sealing the components 38, 39 within the device 31. The extendible bulge 37 has bulged out, and therefore provides the compartment 33 with a volume sufficient for both components 38, 39. If the components 38, 39 are intended to be mixed a user may transfer the components jointly several times between the compartment 33 and the compartment 32 so as to cause agitation and therefore mixture of the components. The compartment 32 may also be provided with an extendible bulge (not shown) so that it can receive the volume of both components. Optionally the openable seal 51 in the open stage may form a flow channel that comprises a diffuser, for example, the flow channel may be formed like a zigzag shape, or the flow channel may comprise one or more flow dividing elements (shown in Fig. 8).

Fig. 6c shows the device 31 when the components 38, 39 are transferred into the well 34. The components in the compartment 33 may be forced towards the well due to the emptied compartment 32 having been folded over the compartment 33, and then both compartments having been squeezed together. The flow channel between the compartments 32, 33 may be substantially blocked due to the fold, so that the components are prevented from escaping from compartment 33 into compartment 32. Therefore compressing the compartment 33 may not result in displacing the material into the compartment 32, but may cause sufficient pressure in the compartment 33 to open the openable seal 52 and to establish a flow channel with an outlet adjacent the well 34. Further, squeezing of both compartments generally simultaneously, as the fold provides for, helps to empty the compartments to a large extent, and helps to avoid waste of the components.

It has been found that it is generally difficult to guide the components, especially those having a high surface tension and/or high viscosity, from the flow channel into an adjacent well.

For example, the components tend to adhere around the outlet of the flow channel and to spread on surfaces adjacent the outlet. However, in another aspect of the invention the portion 42 (shown in Fig. 6c) of the cover 41 helps guide the components into the well. The portion 42 which overlaps the well may also be bulged out, for example to form a nose away from the well as shown in Fig. 7 to help prevent the components from flowing on top of the cover 41. The overlapping portion 42 may also be bent or shaped to extend toward or into the well to prevent spilling of the components, for example in case the components squirt out of the flow channel at a high speed. The overlapping portion 42 may further provide an edge for scraping material from a dental instrument into the well (indicated in Fig. 10), or for scraping off excess material from an applicator that is used to pick up material from the well (not shown).

In the example shown in Fig. 11, the device 71 of the invention may have transparent areas 72 and 73. Such transparent areas may make the contents of the device visible to a user. Therefore the user may assess, for example, a mixing quality of the contents by use of the transparent areas. The base 74 may be opaque, in which case the contents of the device may be assessed against the background of the base 74. The base 74 may also be configured to provide a particular background behind one or both of the transparent areas of the cover 75. The base 74 may further be transparent at least in the area behind one or both of the transparent areas 72, 73 of the cover 75. Therefore the contents of the device may be assessable using transmitted light.

Two embodiments of the invention illustrate ways in which the transparent areas may be integrated into the device of the invention. The transparent area 72 is interconnected to the cover 75. In this case the transparent area 72 and the cover 75 can be obtained from separate parts that have different properties. The cover may be made of a foil that comprises an opaque aluminum layer. An area may be removed from the foil and re-closed by the transparent area 72. For example, the transparent area may circumferentially overlap the removed area and the overlapping areas may be heat-sealed with one another. On the other hand the transparent area 73 may be a part of the cover 75. For example the cover 75 may be color printed or coated with aluminum, and the print or coat may be recessed to form the transparent area 73.

Fig. 12 shows an exemplary device 61 having four components 62, 63, 64, 65. The components 62, 63 may be adapted to be used as a mixture and therefore may be mixed prior to transferring them into the well 66. The components 64, 65 may be added to the mixture of components 62, 63 to modify properties of the mixture as desired by a user. For example, components 62, 63 may be adapted to form a hardenable dental composition, like a dental filling material. The components 62, 63 may be kept separate in the device 61 to keep them usable over a relatively long storage time. A dentist may mix the components 62, 63 in the device immediately prior to use (as described with reference to Figs. 6a - 6c) and transfer the mixture into the well 66. The mixture may have certain standard properties, and therefore the dentist may use the standard mixture for a dental treatment, for example for filling a tooth. However, the dentist may also use any of the additives 64, 65 to change the standard properties as particularly needed for a certain treatment. The additives 64, 65 may, for example, comprise colorants for changing a color shade of the standard mixture towards a color shade better resembling a color shade of a tooth to be treated. The additives 64, 65 may also or instead comprise substances that provide the mixture with different viscosities, different curing times or different hardnesses after curing, for example.

The device of the invention may have a color reference area (as indicated by reference number 67 in Fig. 12) representing a certain color shade, for example. Therefore a user may control the color shade of a material by mixing components of different color shades and comparing the color of the reference area with the color of the mixture.

The device of the invention may be used with a variety of applicators, like brushes, spatulas, and swabs.

## Claims

1. A device (1, 31, 61, 71) for providing a dental material, comprising:
a first (2, 40, 74) and a second (6, 41, 75) sheet-like layer that are interconnected to form a compartment (7, 33, 63), the first layer comprising a well (3, 34, 66) adjacent the compartment with an openable seal (9, 52) arranged between,
the well being formed by a portion of the first layer wherein the junction between the portion of the first layer forming the well and the remainder of the first layer forms an opening of the well,
the openable seal being formed by the interconnected layers which in the area of the seal are adapted to separate upon forcing at least a component of the dental material between the layers,
wherein the second layer only partially overlaps the opening of the well, and
wherein the opening of the well is generally circular and wherein the portion of the second layer overlapping the well has a substantially straight free end spanning the opening of the well.

2. The device of claim 1, wherein the first and second sheet-like layers are part of one larger sheet which is folded to form the first and second layers.

3. The device of claim 1 or 2, further comprising an open pocket for receiving an applicator.

4. The device of claim 1, 2 or 3, wherein the first layer comprises a first deep drawn bulge that together with the second layer forms the compartment.

5. The device of any of the preceding claims, further comprising a second compartment formed by the interconnection of the first and the second layers with a second seal arranged between the compartments, wherein the first layer comprises a second deep drawn bulge that together with the second layer forms the second compartment.

6. The device of claim 5, wherein at least one of the first and second layers has a transparent area that forms a part of at least one of the compartments, and comprising a reference color area adjacent the transparent area.

7. The device of claim 5 or 6, wherein the well has a capacity suitable to receive contents of both compartments.

8. The device of any of the preceding claims, wherein the first and second layers are made of a multilayer film having an outer layer of polyethylene, and wherein at least one of the first and second layers is a multilayer foil comprising an aluminum layer.

9. The device of any of the preceding claims, containing at least one component of a dental restorative, a dental primer, a dental cavity liner, a dental cement, an endodontic material, a dental varnish, a tooth desensitizer, a tooth coating, an orthodontic adhesive, an orthodontic primer, or an orthodontic cement.

10. Method of providing a dental material comprising the steps of:
providing a device comprising:
a first and a second sheet-like layer that are interconnected to form a first and a second compartment,
the first and second compartments containing first and second components of a dental component,
the first layer comprising a well adjacent the first compartment,
a first openable seal is formed between the compartments, and a second openable seal is formed between the first compartment and the well,
the well being formed by a portion of the first layer wherein the junction between the portion of the first layer forming the well and the remainder of the first layer forms an opening of the well,
wherein the second layer partially overlaps the opening of the well, and wherein the opening of the well is generally circular and wherein the portion of the second layer overlapping the well preferably has a substantially straight free end spanning the opening of the well;
compressing at least one of the first and second compartments, and thereby opening the second seal and establishing fluid communication between the first and the second compartments to enable the components to mix;
compressing at least one of the first and second compartments, thereby opening the first seal; and
forcing at least part of the first and second components into the well.

11. The method of claim 10, further comprising the step of alternately compressing the first and second compartments to displace the first and second components between the first and second compartments.

12. The method of claim 10 or 11, further comprising the step of observing the first and second components through a transparent area in at least one of the first and second layers.

13. The method of claim 10, 11 or 12, further comprising the step of mixing the components in the well.

14. A kit of parts, comprising a device (1, 31, 61, 71) according to any of the claims 1 to 9, and a separate dental product selected from a dental crown, bridge, restorative, implant, adhesive, instrument, sealant, dentifrice, oral rinse, orthodontic bracket, and bands.

15. The kit of claim 14, further comprising instructions for using the device of any of the claims 5 to 9 according to the method as specified in any of the claims 10 to 13.

## Patentansprüche

1. Vorrichtung (1, 31, 61, 71) zur Bereitstellung eines Dentalmaterials, umfassend:
eine erste (2, 40, 74) und eine zweite (6, 41, 75)
folienartige Schicht, die miteinander verbunden sind, um eine Kammer (7, 33, 63) zu bilden,
wobei die erste Schicht einen eingelassenen Behälter (3, 34, 66)
angrenzend an die Kammer mit einem zu öffnenden Verschluss (9, 52) umfasst,
der dazwischen angeordnet ist,
wobei der eingelassene Behälter durch einen Abschnitt der ersten Schicht gebildet wird, wobei die Verbindungsstelle zwischen dem Abschnitt der ersten Schicht, der den eingelassenen Behälter bildet, und dem Rest der ersten Schicht eine Öffnung des eingelassenen Behälters bildet,
wobei der zu öffnende Verschluss durch die miteinander verbundenen Schichten gebildet wird, die im Bereich des Verschlusses dazu konzipiert sind, sich zu trennen, wenn wenigstens ein Bestandteil des Dentalmaterials zwischen die Schichten gepresst wird,
wobei die zweite Schicht die Öffnung des eingelassenen Behälters nur teilweise überlappt, und
wobei die Öffnung des eingelassenen Behälters im Allgemeinen kreisförmig ist, und wobei der Abschnitt der zweiten Schicht, der den eingelassenen Behälter überlappt, ein im Wesentlichen gerades, freies Ende aufweist, das die Öffnung des eingelassenen Behälters überspannt.

2. Vorrichtung nach Anspruch 1, wobei die erste und die zweite folienartige Schicht Teil einer größeren Folie sind, die gefaltet ist, um die erste und die zweite Schicht zu bilden.

3. Vorrichtung nach Anspruch 1 oder 2, ferner umfassend eine offene Tasche zur Aufnahme eines Applikators.

4. Vorrichtung nach Anspruch 1, 2 oder 3, wobei die erste Schicht eine erste tiefgezogene Auswölbung umfasst, die zusammen mit der zweiten Schicht die Kammer bildet.

5. Vorrichtung nach einem der vorstehenden Ansprüche, ferner umfassend eine zweite Kammer, die durch die Verbindung der ersten und der zweiten Schicht gebildet ist, mit einem zweiten Verschluss, der zwischen den Kammern angeordnet ist, wobei die erste Schicht eine zweite tiefgezogene Auswölbung umfasst, die zusammen mit der zweiten Schicht die zweite Kammer bildet.

6. Vorrichtung nach Anspruch 5, wobei mindestens eine der ersten und der zweiten Schicht einen transparenten Bereich aufweist, der einen Teil mindestens einer der Kammern bildet, und umfassend einen Referenzfarbbereich angrenzend an den transparenten Bereich.

7. Vorrichtung nach Anspruch 5 oder 6, wobei der eingelassene Behälter ein Fassungsvermögen aufweist, das dazu geeignet ist, den Inhalt beider Kammern aufzunehmen.

8. Vorrichtung nach einem der vorstehenden Ansprüche, wobei die erste und die zweite Schicht aus einer mehrschichtigen Folie hergestellt sind, die eine Außenschicht aus Polyethylen aufweist, und wobei mindestens eine der ersten und der zweiten Schicht eine mehrschichtige Folie ist, die eine Aluminiumschicht umfasst.

9. Vorrichtung nach einem der vorstehenden Ansprüche, enthaltend mindestens einen Bestandteil von einem Zahnrestaurationsmittel, einem Dentalprimer, einer Zahnkavitätsauskleidung, einem Zahnzement, einem endodontischen Material, einem Zahnlack, einem Zahndesensibilisierungsmittel, einer Dentalbeschichtung, einem kieferorthopädischen Klebstoff, einem kieferorthopädischen Primer oder einem kieferorthopädischen Zement.

10. Verfahren zur Bereitstellung eines Dentalmaterials, umfassend die folgenden Schritte:
Bereitstellen einer Vorrichtung, umfassend:
eine erste und eine zweite folienartige Schicht, die miteinander verbunden sind, um eine erste und eine zweite Kammer zu bilden,
wobei die erste und die zweite Kammer einen ersten und einen zweiten Bestandteil einem Dentalbestandteil enthalten,
wobei die erste Schicht einen eingelassenen Behälter angrenzend an die erste Kammer umfasst,
wobei ein erster, zu öffnender Verschluss zwischen den Kammern gebildet ist, und ein zweiter, zu öffnender Verschluss zwischen der ersten Kammer und dem eingelassenen Behälter gebildet ist,
wobei der eingelassene Behälter durch einen Abschnitt der ersten Schicht gebildet wird, wobei die Verbindungsstelle zwischen dem Abschnitt der ersten Schicht, der den eingelassenen Behälter bildet, und dem Rest der ersten Schicht eine Öffnung des eingelassenen Behälters bildet,
wobei die zweite Schicht teilweise die Öffnung des eingelassenen Behälters überlappt, und wobei die Öffnung des eingelassenen Behälters im Allgemeinen kreisförmig ist, und wobei der Abschnitt der zweiten Schicht, der den eingelassenen Behälter überlappt, vorzugsweise ein im Wesentlichen gerades, freies Ende aufweist, das die Öffnung des eingelassenen Behälters überspannt;
Zusammendrücken mindestens einer der ersten und der zweiten Kammer und dadurch Öffnen des zweiten Verschlusses und Herstellen eines Fluidaustausches zwischen der ersten und der zweiten Kammer, um zu ermöglichen, dass sich die Bestandteile vermischen;
Zusammendrücken mindestens einer der ersten und der zweiten Kammer, wodurch der erste Verschluss geöffnet wird; und
Pressen wenigstens eines Teils des ersten und des zweiten Bestandteils in den eingelassenen Behälter.

11. Verfahren nach Anspruch 10, ferner umfassend den Schritt des abwechselnden Zusammendrückens der ersten und der zweiten Kammer, um den ersten und den zweiten Bestandteil zwischen der ersten und der zweiten Kammer zu verschieben.

12. Verfahren nach Anspruch 10 oder 11, ferner umfassend den Schritt des Beobachtens des ersten und des zweiten Bestandteils durch einen transparenten Bereich in mindestens einer der ersten und der zweiten Schicht.

13. Verfahren nach Anspruch 10, 11 oder 12, ferner umfassend den Schritt des Mischens der Bestandteile in dem eingelassenen Behälter.

14. Teilesatz, umfassend eine Vorrichtung (1, 31, 61, 71)
nach einem der Ansprüche 1 bis 9, und ein
separates Dentalprodukt, ausgewählt aus einer Zahnkrone, einer Brücke, einem Restaurationsmittel, einem Implantat, einem Klebstoff, einem Instrument, einem Versiegelungsmittel, einem Zahnputzmittel, einer Mundspülung, einem kieferorthopädischen Bracket und Bändern.

15. Satz nach Anspruch 14, ferner umfassend Anweisungen zur Verwendung der Vorrichtung nach einem der Ansprüche 5 bis 9 gemäß dem Verfahren, wie in einem der Ansprüche 10 bis 13 spezifiziert.

## Revendications

1. Dispositif (1, 31, 61, 71) pour fournir un matériau dentaire, comprenant :
des première (2, 40, 74) et deuxième (6, 41, 75) couches de type feuille, qui sont interconnectées pour former un compartiment (7, 33, 63),
la première couche comprenant un puits (3, 34, 66) adjacent au compartiment avec un joint ouvrable (9, 52) disposé entre eux,
le puits étant formé par une partie de la première couche, dans lequel la jonction entre la partie de la première couche formant le puits et le reste de la première couche forme une ouverture du puits,
le joint ouvrable étant formé par les couches interconnectées qui, dans la zone du joint, sont conçues pour se séparer lorsque l'on force au moins un composant du matériau dentaire entre les couches,
dans lequel la deuxième couche ne chevauche que partiellement l'ouverture du puits, et
dans lequel l'ouverture du puits est généralement circulaire et dans lequel la partie de la deuxième couche chevauchant le puits comporte une extrémité libre essentiellement linéaire couvrant l'ouverture du puits.

2. Dispositif selon la revendication 1, dans lequel les première et deuxième couches de type feuille, font partie d'une plus grande feuille qui est pliée pour former les première et deuxième couches.

3. Dispositif selon la revendication 1 ou 2, comprenant en outre une poche ouverte pour recevoir un applicateur.

4. Dispositif selon la revendication 1, 2 ou 3, dans lequel la première couche comprend une première protubérance emboutie qui, conjointement avec la deuxième couche, forme le compartiment.

5. Dispositif selon l'une quelconque des revendications précédentes, comprenant en outre un deuxième compartiment formé par l'interconnexion des première et deuxième couches avec un deuxième joint disposé entre les compartiments, dans lequel la première couche comprend une deuxième protubérance emboutie qui, conjointement avec la deuxième couche, forme le deuxième compartiment.

6. Dispositif selon la revendication 5, dans lequel au moins l'une des première et deuxième couches comporte une zone transparente qui forme une partie d'au moins un des compartiments, et comprenant une zone de couleur de référence adjacente à la zone transparente.

7. Dispositif selon la revendication 5 ou 6, dans lequel le puits a une capacité appropriée pour recevoir le contenu de l'un et l'autre des compartiments.

8. Dispositif selon l'une quelconque des revendications précédentes, dans lequel les première et deuxième couches sont constituées d'un film multicouche comportant une couche externe de polyéthylène, et dans lequel au moins l'une des première et deuxième couches est une feuille multicouche comprenant une couche d'aluminium.

9. Dispositif selon l'une quelconque des revendications précédentes, contenant au moins un composant d'un agent de restauration dentaire, d'un apprêt dentaire, d'un revêtement de cavité dentaire, d'un ciment dentaire, d'un matériau endodontique, d'un vernis dentaire, d'un désensibilisant dentaire, d'un revêtement dentaire, d'un adhésif orthodontique, d'un apprêt orthodontique ou d'un ciment orthodontique.

10. Procédé de fourniture d'un matériau dentaire, comprenant les étapes consistant à :
fournir un dispositif comprenant :
des première et deuxième couches de type feuille qui sont interconnectées pour former des premier et deuxième compartiments,
les premier et deuxième compartiments contenant des premier et deuxième composants d'un composant dentaire,
la première couche comprenant un puits adjacent au premier compartiment,
un premier joint ouvrable est formé entre les compartiments, et un deuxième joint ouvrable est formé entre le premier compartiment et le puits,
le puits étant formé par une partie de la première couche, dans lequel la jonction entre la partie de la première couche formant le puits et le reste de la première couche forme une ouverture du puits,
dans lequel la deuxième couche chevauche partiellement l'ouverture du puits, et dans lequel l'ouverture du puits est généralement circulaire et dans lequel la partie de la deuxième couche chevauchant le puits comporte de préférence une extrémité libre essentiellement linéaire couvrant l'ouverture du puits ;
comprimer au moins un des premier et deuxième compartiments, et ouvrir de ce fait le deuxième joint et établir une communication de fluide entre les premier et deuxième compartiments pour permettre aux composants de se mélanger ;
comprimer au moins un des premier et deuxième compartiments, en ouvrant de ce fait le premier joint ; et
forcer au moins une partie des premier et deuxième composants dans le puits.

11. Procédé selon la revendication 10, comprenant en outre l'étape consistant à comprimer en alternance les premier et deuxième compartiments pour déplacer les premier et deuxième composants entre les premier et deuxième compartiments.

12. Procédé selon la revendication 10 ou 11, comprenant en outre l'étape consistant à observer les premier et deuxième composants à travers une zone transparente dans au moins une des première et deuxième couches.

13. Procédé selon la revendication 10, 11 ou 12, comprenant en outre l'étape consistant à mélanger les composants dans le puits.

14. Trousse de pièces, comprenant un dispositif (1, 31, 61, 71) selon l'une quelconque des revendications 1 à 9, et un produit dentaire indépendant choisi parmi une couronne dentaire, un bridge, un agent de restauration, un implant, un adhésif, un instrument, un produit de scellement, un dentifrice, un produit de rinçage oral, un bracket orthodontique et des bandes.

15. Trousse selon la revendication 14, comprenant en outre des instructions d'utilisation du dispositif selon l'une quelconque des revendications 5 à 9 selon le procédé tel que spécifié dans l'une quelconque des revendications 10 à 13.
